# EUROPEAN PATENT APPLICATION

(11) **EP 4 600 619 A1**
(43) Date of publication of application: **13.08.2025**
(21) Application number: 24155899.8
(22) Date of filing: 06.02.2024
(51) Int. Cl.: G01J 1/02, G01J 1/42

(54) **MEASURING PROPERTIES OF ARTIFICIAL ILLUMINATION INSIDE A BUILDING**

(71) Applicant: InUnum AG, 9491 Ruggell (LI)
(72) Inventor: Hackl, Eberhard, 9491 Ruggell (LI); Lenz, Patrick, 9491 Ruggell (LI)
(74) Representative: Torggler & Hofmann Patentanwälte - Rankweil

(57) **Abstract**

A method and a system for analyzing at least one light effect or at least one quantity of an artificial lighting system inside a region of measurement using a portable photometer (1) and a digital 3D map of the region of measurement.

## Description

### TECHNICAL FIELD

In one aspect the invention is in the field of measuring at least one light effect or at least one quantity of an artificial lighting system inside a region of measurement.

For various reasons it is often necessary to document the lighting situation in a specific region (the region of measurement).

In particular, inside a building equipped with an artificial lighting system it is often necessary to document the lighting situation for the whole building.

It is known that when using artificial lighting systems unwanted temporal light modulation can occur such as "visual flicker". As defined on Wikipedia (visited on 27 January 2023) visual flicker is a "human-visible change in luminous flux of an illuminated surface or light source which can be due to fluctuations of the light source itself, or due to external causes such as due to rapid fluctuations in the voltage of the power supply (power-line flicker) or incompatibility with an external dimmer".

### BACKGROUND

It is known to implement a test scheme for measuring at least one light effect of an artificial lighting system inside a region of measurement by preparing a dot grid on a ground of the region of measurement and by taking light measurements at each dot of the grid. This is time consuming and error prone.

### SUMMARY OF INVENTION

It is an object of the invention to provide a method, a system, a computer program and a data carrier signal for measuring at least one light effect of an artificial lighting system inside a region of measurement, in particular inside a building, which are less time consuming and less error prone.

Still other objects and advantages of the invention will in part be obvious and will in part be apparent from the specification and drawings.

The term "3D" stands for "three-dimensional".

The term "2D" stands for "two-dimensional".

Whenever the present disclosure refers to at least one computer it is to be understood that the processes to be executed by said at least computer can be executed by a single computer or more than one computer.

A "photometer" is an instrument that measures the strength of electromagnetic radiation at least in the visible spectrum.

One object of the disclosure relates to a method for analyzing at least one light effect or at least one quantity of an artificial lighting system in at least one region of measurement, comprising at least:
- providing
   ∘ at least one photometer
   ∘ a device for determining the position of the at least one photometer in the at least one region of measurement
- providing
   ∘ at least one digital 2D or 3D map of the at least one region of measurement, and/or
   ∘ at least one plurality of digital 2D or 3D positions inside the at least one region of measurement
- moving the at least one photometer around in the at least one region of measurement, executing a plurality of measurements of the at least one light effect or the at least one quantity, wherein for each of the measurements the result of the measurement and the position at which the measurement was executed in the at least one region of measurement is stored
- providing at least one computer being configured to obtain the measurements executed by the at least one photometer together with information at which position each of the measurements was executed and being further configured to analyze the at least one light effect or the at least one quantity for each position

Another object of the disclosure relates to a system for analyzing at least one light effect or at least one quantity of an artificial lighting system in at least one region of measurement, in particular a system for use in a method according to at least one of the embodiments discussed in the present disclosure, comprising at least:
- at least one computer configured to obtain
   ∘ at least one digital 2D or 3D map of the at least one region of measurement and/or
   ∘ at least one plurality of digital 2D or 3D positions inside the at least one region of measurement
- at least one portable photometer
- a device for determining the position of the at least one photometer in the at least one region of the measurement
- at least one computer being configured to execute a plurality of measurements of the at least one light effect or the at least one quantity, wherein for each of the measurements the result of the measurement and the position at which the measurement was executed in the at least one region of measurement is stored
- providing at least one computer being configured to obtain the measurements executed by the at least one photometer together with information at which position each of the at least one measurement was executed and being further configured to analyze the at least one light effect or the at least one quantity for each position

These objects allow for measuring at least one light effect of an artificial lighting system inside at least one region of measurement in a less time-consuming and less errorprone manner because no dot grid has to be prepared and the position of the photometer can be determined without any relevant error.

Another advantage is the possibility to obtain a large and preferably continuous set of data.

Preferred embodiments of the invention are described in dependent claims.

### DESCRIPTION OF EMBODIMENTS

The following description refers to both, embodiments of the method and of the system, of the invention.

At least one region of measurement can be chosen inside the interior of a building in at least one region of the building. In addition or alternatively, at least one region of measurement can be chosen in the outside, preferably inside an artificial open structure such as a sports stadium.

By way of example the at least one light effect is a temporal light modulation, in particular visual flicker.

The at least one digital 3D map of the at least one region of measurement can be obtained using at least one 3D scanner and, e. g., the well-known SLAM algorithm ("simultaneous location and mapping" algorithm). This can be done either dynamically while the at least one photometer is present in the at least one region of measurement or the at least one digital 3D map can be obtained at an earlier time.

As an alternative or in addition to using at least one digital 3D map a plurality of digital 3D positions can be provided, preferably in the way of a 3D trajectory. A measurement can be executed at all or a subset of these 3D positions.

The device for determining the position of the at least one photometer can be embodied by at least one 3D scanner and/or by at least one inertial measurement unit (IMU).

Preferably, the relative positions of the device for determining the position of the at least one photometer and the at least one 3D scanner are known because they are mounted on a common carrier device. Alternatively, e. g., if the device for determining the position of the at least one photometer and the at least one 3D scanner are arranged on different carrier devices, the position of the device for determining the position of the at least one photometer and the at least 3D scanner can be obtained separately (e. g., by using an inertial measurement unit for each of them) and the relative positions of the device for determining the position of the at least one photometer and the at least one 3D scanner can be calculated at any time.

In some embodiments it is envisioned that the carrier device is carried by a person or by an automobile carrier, e. g. a robot. In the case of an automobile carrier such carrier can be ground-bound or airborne.

In a preferred embodiment the at least one photometer is moved around freely in the at least one region of measurement by way of at least one carrier.

In some embodiments a height of the photometer above a ground surface of the at least one region of measurement is determined at each stop at which at least one measurement of the at least one light effect is executed, and this information is used by at least one computer configured to analyze the at least one light effect for each position taking into account the height at which each of the at least one measurement was taken. This can be done, e. g., by making sure that a measurement is taken at a prescribed height or computationally eliminating the effects of an incorrect height. The determination of the height can be done dynamically using a device for measuring height or it can be done by using the 3D data.

In some embodiments the at least one digital 3D map includes information about at least one of:
- the positions of artificial light sources of an artificial lighting system in or nearby the at least one region of measurement
- solar altitude and azimuth in relation to regions of measurement, in particular in relation to transparent regions of a building, which are positioned in such a way in relation to the at least one region of measurement that the at least one measurement will include a contribution of solar radiation
- shadows cast by objects in or nearby the at least one region of measurement

### BRIEF DESCRIPTION OF DRAWINGS

Figure 1 shows a possible result of the method in case of an interior of a building.
Figure 2 shows a possible result of the method in case of a soccer field in an exterior environment.
Figure 3 shows a possible embodiment of the method.

### DETAILED DESCRIPTION OF DRAWINGS

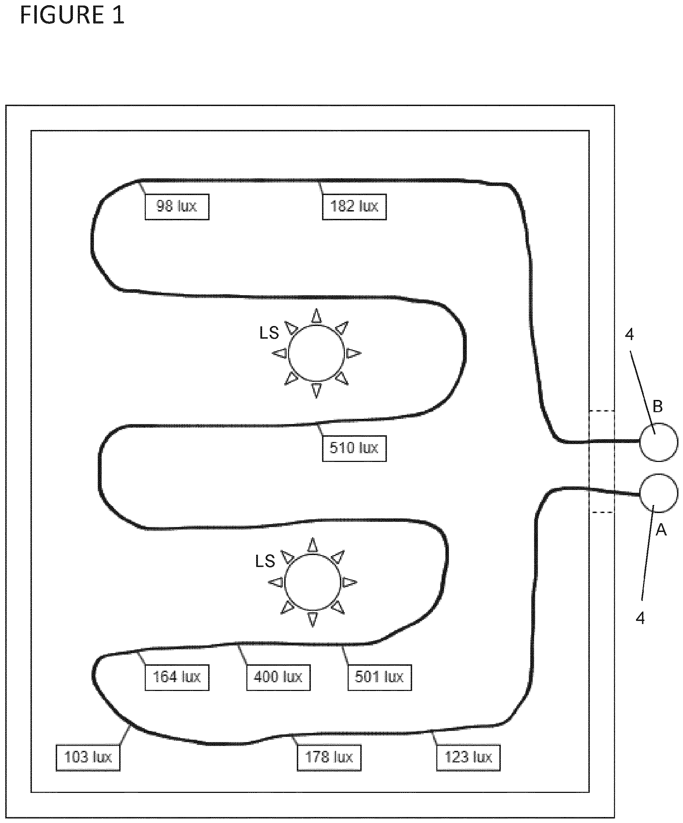

Figure 1 depicts an exemplary measurement of a quantity of an artificial lighting system in the form of illuminance within an interior of a building (e.g., a room or hall) as seen from bird's eye view.

Figure 1 shows the walls of the object, two artificial light sources L and the path (i.e. trajectory) of the carrier 4 (holding a 3D scanner 3 and a photometer 1) moved from a start position A through the interior environment to an end position B.

While the carrier 4 is moved from the start position A to the end position B the 3D scanner 3 creates a 3D map of the interior environment and the photometer 1 simultaneously and continuously measures the illuminance along the shown trajectory. Some exemplary illuminance measurements are shown in Figure 1.

The trajectory of the carrier 4 depicts the position of the 3D scanner 3 at a certain point in time. The trajectory is computed dynamically by a 3D mapping algorithm.

The measurements of the photometer 1 are mapped to their corresponding 3D positions by taking into account the trajectory as measured by the 3D scanner 3, as well as the known relative position and orientation of the photometer 1 with respect to the 3D scanner 3.

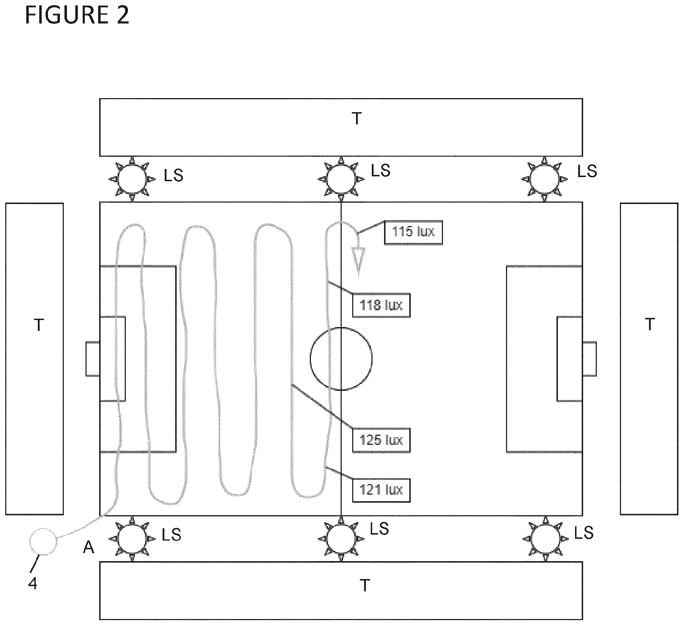

Figure 2 depicts an exemplary measurement of a quantity of an artificial lighting system in the form of illuminance in an exterior environment such as a soccer field as seen from bird's eye view.

Figure 2 shows the soccer field in the center of the figure, surrounded by six artificial light sources L and four spectator terraces T. The soccer field is located in an exterior environment, and it is assumed that the measurement occurs on a dark evening (i.e. no additional brightening due to sun and/or moon).

In Figure 2 the start position of the measurement is labelled by A. Starting from the initial position A, the carrier 4 (holding a 3D scanner 3 and a photometer 1) is moved on an arbitrary path on the soccer field in the exterior environment. In the figure the trajectory of the 3D scanner 3 is shown in gray color and, for clarity, is only shown for the first part of the field.

The surrounding spectator terraces T provide a sufficient amount of 3D structure for the 3D mapping algorithm. In case no terraces are available, one may position at least one object with a sufficient amount of 3D structure on or nearby the soccer field.

As in the previous example, the photometer 1 continuously measures the illuminance along the path taken. A few exemplary illuminance measurements are shown in Figure 2.

The mapping of the measurements of the photometer 1 to their corresponding 3D positions is done in the same way as in the previous example.

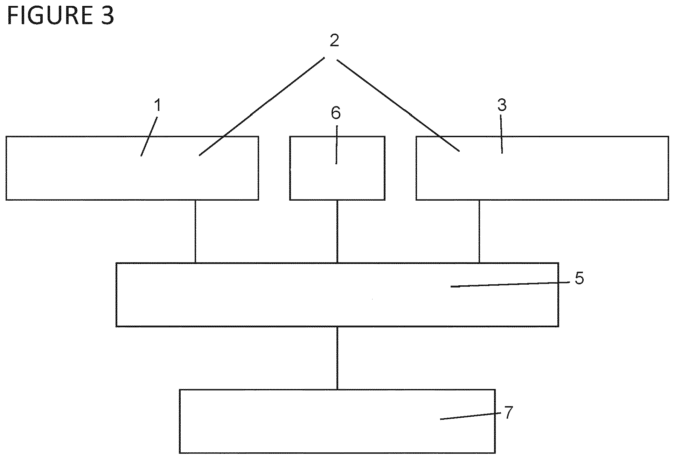

Figure 3 shows a possible system assembled on a carrier 4 comprising a 3D scanner 3, an inertial measurement unit (IMU), a photometer 1 as well as a computer and a communication module 5.

## Claims

1. Method for analyzing at least one light effect or at least one quantity of an artificial lighting system in at least one region of measurement, comprising at least:
- providing
∘ at least one photometer (1), and
∘ a device (2) for determining the position of the at least one photometer in the at least one region of measurement
- providing
∘ at least one digital 2D or 3D map of the at least one region of measurement, and/or
∘ at least one plurality of digital 2D or 3D positions inside the at least one region of measurement
- moving the at least one photometer (1) around in the at least one region of measurement, executing a plurality of measurements of the at least one light effect or the at least one quantity, wherein for each of the measurements the result of the measurement and the position at which the measurement was executed in the at least one region of measurement is stored, and
- providing at least one computer being configured to obtain the measurements executed by the at least one photometer (1) together with information at which position each of the measurements was executed and being further configured to analyze the at least one light effect or the at least one quantity for each position.

2. Method according to the preceding claim wherein a temporal light modulation, in particular visual flicker, is measured as the at least one light effect and/or an illuminance is measured as the at least one quantity.

3. Method according to one of the preceding claims wherein the at least one photometer (1) is moved around freely in the at least one region of measurement.

4. Method according to at least one of the preceding claims wherein the device (2) for determining the position of the at least one photometer (1) is preferably embodied by at least one 3D scanner (3) and/or an IMU, and the at least one photometer (1) is arranged on a common carrier (4).

5. Method according to at least one of the preceding claims wherein the plurality of measurements is executed upon
- command by a user or
- sensing a stop in the movement of the at least one portable photometer (1) or
- at pre-determined times and/or positions

6. Method according to at least one of the preceding claims wherein there is provided at least one computer configured to dynamically obtain the at least one digital 2D or 3D map of the at least one region of measurement from at least one 2D or 3D scanner while the at least one photometer (1) is present in the at least one region of measurement and the position of that at least one photometer (1) is determined using the dynamically obtained at least one digital 2D or 3D map.

7. Method according to at least one of claims 1 to 5 wherein the at least one digital 2D or 3D map of the at least one region of measurement is provided in the form of at least one pre-generated digital 2D or 3D map and the position of the at least one photometer (1) is determined using the at least one pre-generated digital 2D or 3D map together with a known starting position of the photometer (1).

8. Method according to at least one of the preceding claims wherein a height of the at least one photometer (1) above a ground surface of the at least one region of measurement is determined at each measurement of the at least one light effect or the at least one quantity, and this information is used by at least one computer configured to analyze the at least one light effect or the at least one quantity for each position taking into account the height at which each of the measurements was taken.

9. Method according to at least one of the preceding claims wherein the at least one digital 2D or 3D map includes information about at least one of:
- the positions of artificial light sources of the artificial lighting system in or nearby the at least one region of measurement
- solar altitude and azimuth in relation to regions which are positioned in such a way in relation to the at least one region that the at least one measurement will include a contribution of solar radiation
- shadows cast by objects in or nearby the at least one region of measurement

10. Method according to at least one of the preceding claims wherein the method is carried out inside a building and the region of measurement is chosen as at least one region of the building.

11. A system for analyzing at least one light effect or at least one quantity of an artificial lighting system in at least one region of measurement, in particular a system for use in a method according to at least one of the preceding claims, comprising at least:
- at least one computer configured to obtain
∘ at least one digital 2D or 3D map of the at least one region of measurement and/or
∘ at least one plurality of digital 2D or 3D positions inside the at least one region of measurement
- at least one portable photometer (1)
- a device (2) for determining the position of the at least one photometer in the at least one region of the measurement
- at least one computer being configured to execute a plurality of measurements of the at least one light effect or the at least one quantity, wherein for each of the measurements the result of the measurement and the position at which the measurement was executed in the at least one region of measurement is stored
- providing at least one computer being configured to obtain the measurements executed by the at least one photometer (1) together with information at which position each of the at least one measurement was executed and being further configured to analyze the at least one light effect or the at least one quantity for each position.

12. System according to the preceding claim wherein the system comprises at least one computer which is configured to dynamically obtain the at least one digital 2D or 3D map of the at least one region of measurement from at least one 3D scanner (3) while the at least one photometer (1) is present in the at least one region of measurement and which is configured to determine the position of that at least one photometer (1) using the dynamically obtained at least one digital 2D or 3D map.

13. System according to claim 11 wherein the system comprises at least one computer which is configured to obtain the at least one digital 2D or 3D map of the at least one region of measurement in the form of at least one pre-generated digital 2D or 3D map and which is configured to determine the position of that at least one photometer (1) using the at least one pre-generated digital 2D or 3D map together with a known starting position of the at least one photometer (1).

14. System according to at least one of claims 11 to 13 wherein the system comprises a device to measure a height of the at least one photometer (1) above a ground surface of the at least one region of measurement and the system further comprises at least one computer which is configured to use the height information to analyze the at least one light effect or the at least one quantity for each position taking into account the height at which each of the at least one measurement was taken.

15. System according to at least one of claims 11 to 14 wherein the at least one digital 3D map includes information about at least one of:
- the positions of artificial light sources of the artificial lighting system in or nearby the at least one region of measurement
- shadows cast by objects in or nearby the at least one region of measurement
- solar altitude and azimuth in relation to regions which are positioned in such a way in relation to the at least one region of measurement that the at least one measurement will include a contribution of solar radiation
and the system comprises at least one computer which is configured to use this information for analyzing the at least one light effect or the at least one quantity for each position.

16. System according to at least one of claims 11 to 15 wherein the device (2) for determining the position of the at least one photometer (1) is preferably embodied by at least one 3D scanner (3) and/or an IMU, and the at least one photometer (1) is carried by a common carrier (4).
